# EUROPÄISCHE PATENTSCHRIFT

(11) **EP 2 236 313 B1**
(45) Veröffentlichungstag und Bekanntmachung des Hinweises auf die Patenterteilung: **11.07.2012**
(21) Anmeldenummer: 09004656.6
(22) Anmeldetag: 31.03.2009
(51) Int. Cl.: B44C 5/04

(54) **Verfahren zum Herstellen von Paneelen und nach dem Verfahren hergestelltes Paneel**
Method for manufacturing panels and panels manufactured according to this method
Procédé destiné à la fabrication de panneaux et panneaux fabriqués selon ce procédé

(43) Veröffentlichungstag der Anmeldung: 06.10.2010
(73) Patentinhaber: Flooring Technologies Ltd., Pieta MSD 08 (MT)
(72) Erfinder: Oldorff, Frank, 19057 Schwerin (DE)
(74) Vertreter: Rehmann, Thorsten

(56) Entgegenhaltungen:
- EP-A- 0 536 795
- EP-A- 1 454 763
- EP-A- 1 754 583
- WO-A-03/087498
- DE-A1- 4 310 685
- DE-A1-102004 056 585

## Beschreibung

Die Erfindung betrifft ein Verfahren zum Herstellen von Paneelen, die aus einer großformatigen Trägerplatte mit einem Kern aus Holzwerkstoff aufgeteilt werden.

Aus der EP 1 454 763 A2 ist ein Verfahren zum Veredeln einer Holz- oder Holzwerkstoffplatte, insbesondere MDF- oder HDF-Platte mit einer Oberseite und einer Unterseite bekannt, bei dem zunächst auf die Oberseite der Platte eine Versiegelungsschicht aus Melaminharz aufgetragen wird, auf die Versiegelungsschicht ein Dekor aufgedruckt und auf das Dekor dann eine Schutzschicht aus Melaminharz aufgetragen wird. Anschließend wird der Aufbau der Platte unter Temperatureinwirkung verpresst, bis die Schutzschicht und die Versiegelungsschicht schmelzen und sich unter Einschluss des aufgedruckten Dekors miteinander verbinden.

In der DE 195 32 819 A1 wird ein Verfahren zur Herstellung einer Holzwerkstoffplatte mit einer optisch gestaltbaren Oberfläche offenbart, bei der auf der Holzwerkstoffplatte nacheinander eine Grundierfärbung, eine Versiegelung, eine Druckbasis und ein Dekordruck aufgebracht werden. Die Druckbasis wird dabei aus einer Grundiereinfärbung bzw. einer Grundierung einer Lackversiegelung und einem Oberflächenlack aufgebaut. Mittels Gravurzylindern kann auf die Druckbasis ein Dekordruck beispielsweise in einem Zwei-Farben-Druck aufgedruckt werden. Auf diesen Druck kann abschließend ein mehrschichtiger Acrylat-UV-Lack aufgebracht werden, der mittels UV-Licht härtbar ist.

Die DE 197 51 115 A1 offenbart ein Verfahren zur Beschichtung eines Paneels, bei dem auf die Oberfläche zumindest eine Farbschicht mittels eines Druckverfahrens, insbesondere mittels Siebdruck, aufgebracht wird. Dabei kann die Oberfläche unbehandelt, geschliffen oder vorbehandelt, insbesondere lackiert sein. Abschließend kann die aufgebrachte Farbschicht durch eine Beschichtung mit Klarlack abgedeckt werden.

Bei der Anwendung der Direktdrucktechnologie, also das unmittelbare Aufdrucken der einzelnen Schichten auf die Trägerplatte, zeigt sich im Ergebnis gegenüber herkömmlich gefertigten Paneelen eine Dickenminderung der fertigen Laminatpaneele durch das Weglassen der Papierlagen. Dies führt zu Problemen bei der Fließfertigung, wenn die großformatigen beschichteten Platten anschließend zur Herstellung der Paneele aufgeteilt werden. Damit sichergestellt ist, dass einzelne Paneele nicht durch Untermaß der Dicke aus der DIN 13329 herausfallen, muss eine hohe Qualitätssicherung betrieben werden, was einerseits die Fertigung verlangsamt und andererseits auch die Herstellkosten erhöht. Letztendlich kommt es auch zu einer Irritation beim Händler und/oder Endverbraucher, da die Stapelhöhe direkt beschichteter Platten von herkömmlich beschichteten Platten sichtbar abweicht.

Bei der bekannten Plattenfertigung werden üblicherweise HDF-Platten als Trägerplatten eingesetzt, deren Oberseite um etwa 0,3 mm abgeschliffen wird. An der Oberseite und der Unterseite der Trägerplatte ist eine Presshaut ausgebildet, die auch Press-Patina oder Verrottungsschicht genannt wird. Die Presshaut entsteht beim Verpressen des Faserkuchens und wird durch die heiße Oberfläche der Pressplatten bzw. Bänder der Presse erzeugt. Die Presshaut hat eine Dicke von etwa 0,3 mm. Da die Presshaut vollständig und etwa 0,1 mm vom Kernmaterial zur Verringerung der Rautiefe auf der Oberseite der Trägerplatte vor der weiteren Beschichtung abgeschliffen wird, müssen die Platten um eine entsprechende Schleifzugabe dicker gefertigt werden, was die Herstellungskosten nachhaltig beeinflusst. Um ein normgerechtes, mittels Direktdrucktechnologie hergestelltes Fußbodenlaminat mit einer Dicke von 6 mm herzustellen, muss die Trägerplatte mindestens eine Dicke von 6,1 mm aufweisen.

Die Presshaut muss abgeschliffen werden, weil in ihrem Bereich der Wärmeeintrag beim Heißpressen so hoch ist, dass der Klebstoff zu schnell aushärtet, wodurch Leimbrücken wenigstens teilweise brechen und die die aufgetragene Schicht anfällig machen. Dieses Brechen der Leimbrücken macht fertigte Paneele anfällig gegen Abhebungen der auf die Trägerplatte aufgebrachten dekor- und abriebfesten Schichten. Diese Abhebungen werden Delaminierung genannt, die bereits bei normaler Belastung und aus der für Holzwerkstoffe typischen Größenänderung aufgrund von Klimaschwankungen auftreten kann.

Es besteht deshalb ein großer Bedarf an abriebfesten Laminatpaneelen, die sich innerhalb der in der vorstehend genannten Norm befindlichen Dickentoleranz befinden. Ferner besteht Bedarf an einem ressourcenschonenden Verfahren zur Herstellung, beim dem Extrakosten aus zusätzlichen Verfahrensschritten und/oder durch zusätzliche Materialien weitgehend vermieden werden.

Von dieser Problemstellung ausgehend soll das eingangs beschriebene Verfahren zur Herstellung von Paneelen, insbesondere Fußbodenpaneelen, verbessert werden.

Zur Problemlösung zeichnet sich das Verfahren durch folgende Schritte aus:
a) Bereitstellen einer großformatigen, pressblanken Trägerplatte aus Holzwerkstoff, die zumindest auf ihrer Oberseite eine bei ihrer Herstellung entstandene Presshaut aufweist,
b) Abschleifen eines Teils der Presshaut von der Oberseite der Trägerplatte,
c) Auftragen einer Grundierung aus einem flüssigen Harz auf Melaminbasis auf die Oberseite der Trägerplatte, wobei das Harz wenigstens teilweise in die obere Randschicht der Trägerplatte hinein diffundiert und den verbliebenen Bereich der Presshaut zumindest teilweise durchdringt und vergütet,
d) Trocknen der Grundierung,
e) Auftragen eines Primers auf die Grundierung,
f) Trocknen des Primers,
g) Auftragen wenigstens eines mit Farbpigmenten angereicherten, wasserbasierten Lackes zur Erzeugung eines Dekors,
h) Trocknen des Dekors,
i) Aufbringen einer Versiegelung aus wenigstens einem mit abriebfesten Partikeln und Zellulosefasern angereicherten Harz auf Melaminbasis,
j) Trocken der Versiegelung,
k) Auftragen einer Grundierung aus einem flüssigen Harz auf Melaminbasis auf die Unterseite der Trägerplatte, wobei das Harz wenigstens teilweise in die untere Randschicht der Trägerplatte hinein diffundiert,
l) Trocknen der Grundierung,
m) Aufbringen eines Gegenzuges auf die Unterseite der Trägerplatte,
n) Verpressen des Schichtaufbaues unter Wirkung und von Druck und Temperatur,
o) Aufteilen der Trägerplatte in Paneele gewünschter Breite und Länge,
p) Anbringen von Verbindungsmitteln und Verriegelungselementen an sich gegenüberliegenden Seitenkanten zum leimlosen Verbinden und Verriegeln mehrerer Paneele zu einem schwimmend verlegten Fußbodenverbund.

Durch dieses Verfahren kann eine Materialeinsparung von nahezu 5 % erreicht werden, wodurch Holz, Leim und Teile der zur Verarbeitung notwendigen Energie eingespart werden. Ein normgerechtes 6 mm-Laminatpaneel kann aus einer Trägerplatte hergestellt werden, die 5,8 mm dick ist. Bei einem herkömmlichen Herstellungsverfahren muss die Trägerplatte eine Dicke von 6,1 mm aufweisen.

Dadurch, dass die Trägerplatte dünner gefertigt werden kann, steigt die Geschwindigkeit der Heißpresse und damit auch deren Ausbringung (Menge/Zeiteinheit). Da die Presshaut nicht vollständig abgeschliffen wird, entfällt nicht nur Handlingzeit, was die Produktionszeit reduziert, sondern auch die laufenden Kosten für die Schleifbänder fallen geringer aus. Da die Schicht höchster Rohdicke nahezu erhalten bleibt, kann das Heißpressen mit weniger Druck und/oder mit höherer Geschwindigkeit erfolgen. Das Einstellfenster zum Heißpressen zur Optimierung der Ausbringung wird folglich größer.

Durch das Penetrieren von Harz in die obere Schicht der Trägerplatte werden einerseits die Eigenschaften der restlichen Presshaut kompensiert und gleichzeitig ein guter Unterbau für Dekor und abriebfeste Lage geschaffen. In der Praxis hat sich gezeigt, dass die Gefahr einer Delaminierung bei Bodenpaneelen, die erfindungsgemäß hergestellt wurden, gering ist. Eine deutliche Qualitätsverbesserung wurde erreicht.

Vorzugsweise wird als Trägerplatte eine MDF-, HDF- oder Spanplatte verwendet.

Die Dicke der Trägerplatte weist vorzugsweise eine Dicke von 5,8 mm auf und die Presshaut weist insbesondere vorzugsweise eine Dicke von etwa 0,2 mm auf.

Bevorzugt wird die Presshaut an der Oberseite der Trägerplatte um etwa 0,1 mm abgeschliffen. Dadurch ist es möglich, dass die Grundierung dann die Presshaut in eine Tiefe von etwa 0,1 mm durchdringen kann.

Als abriebfeste Partikel werden vorzugsweise Korundpartikel in der Versiegelungsschicht verwendet.

Nach der Aufteilung kann eine Mehrzahl von Paneelen zu einem Gebinde verpackt werden.

Ein Bodenpaneel mit einem Kern aus einem Holzwerkstoff, insbesondere aus MDF, HDF oder Span zeichnet sich durch folgende Merkmale aus:
a) einer Oberseite, einer Unterseite und zwei Paar gegenüberliegenden Seitenkanten,
b) die Oberseite und die Unterseite des Kerns weisen eine beim Verpressen entstandene Presshaut auf,
c) die Presshaut an der Oberseite ist dünner als die Presshaut an der Unterseite,
d) auf der Oberseite des Kerns sind eine Grundierschicht, eine Primerschicht, wenigstens eine Dekorschicht und eine abriebfeste Schicht aufgebracht,
e) auf der Unterseite des Kerns sind eine Grundierschicht und eine Gegenzugschicht aufgebracht,
f) die Grundierschicht ist zumindest teilweise in die Presshaut an der Oberseite eingedrungen.

Die Grundierschicht besteht vorzugsweise aus einem Melaminharz. Die Presshaut ist an der Oberseite etwa 0,1 mm dünner als an der Unterseite, was vorzugsweise durch Abschleifen eingestellt wird. Die Restdicke der Presshaut an der Oberseite beträgt vorzugsweise 0,1 mm.

Die abriebfeste Schicht weist neben Zellulosefasern als abriebfeste Partikel vorzugsweise Korundpartikel auf.

Nachfolgend soll das erfindungsgemäße Verfahren beispielhaft für ein die DIN 13329 erfüllendes 6 mm-Fußbodenlaminat erläutert werden.

Zunächst wird eine großformatige pressblanke Trägerplatte aus MDF-, HDF- oder Spanmaterial mit einer Dicke von etwa 5,8 mm bereitgestellt. Die Trägerplatte ist an ihrer Oberseite und ihrer Unterseite mit einer Presshaut versehen, die infolge der heißen Pressbleche beim Verpressen des Faser- oder Spänekuchens entstanden ist. An der Oberseite der Trägerplatte wird die Presshaut zunächst um etwa 0,1 mm abgeschliffen. Dann wird die abgeschliffene Oberseite mit einem flüssigen Harz auf Melaminbasis grundiert. Das Harz diffundiert mit seinen aushärtbaren Bestandteilen zumindest teilweise in die obere Randschicht und durchdringt den verbliebenen Bereich der Presshaut um etwa 0,1 mm. Dadurch wird die Presshaut vergütet.

Anschließend erfolgt ein Trockungsvorgang. Auf die getrocknete Grundierung wird eine Primerschicht aufgetragen und anschließend getrocknet. Auf die trockene Primerschicht wird wenigstens ein mit Farbpigmenten angereicherter, wasserbasierter Lack zur Erzeugung eines Dekors aufgetragen. Das Dekor kann Uni-Farben, eine Holzmaserung, einen Fliesenspiegel oder ein Phantasiedekor sein. Auch Natursteindekore sind vorstellbar. Nachdem die aufgebrachte Dekorschicht getrocknet wurde, wird eine Versiegelung mit wenigstens einem mit abriebfesten Partikeln und Zellulosefasern angereicherten Harz aufgebracht. Das Harz ist auf Melaminbasis aufgebaut. Anschließend wird die aufgebrachte Versiegelung getrocknet und dann die Unterseite der Trägerplatte mit einem flüssigen Harz auf Melaminbasis grundiert, wobei das Harz wenigstens teilweise in die untere Randschicht und ggf. die untere Presshaut hinein diffundiert. Die Grundierung wird sodann vollständig getrocknet und eine flüssige Kunstharzschicht als Gegenzug auf die Unterseite der Trägerplatte aufgestrichen. Anschließend wird dieser Schichtaufbau unter Wirkung von Druck und Temperatur verpresst.

Die so veredelte großformatige Trägerplatte wird dann in Paneele gewünschter Größe aufgeteilt. Anschließend werden die gegenüberliegenden Seitenkanten der aufgeteilten Paneele mit zueinander korrespondierenden Verbindungsmitteln und Verriegelungselementen profiliert, damit mehrere identisch ausgebildete Paneele miteinander verbunden und zueinander verriegelt werden können, um einen schwimmend verlegten Fußbodenverbund herzustellen.

Eine Mehrzahl aufgeteilter Paneele wird in bekannter Weise zu einem Gebinde verpackt und ggf. eingelagert.

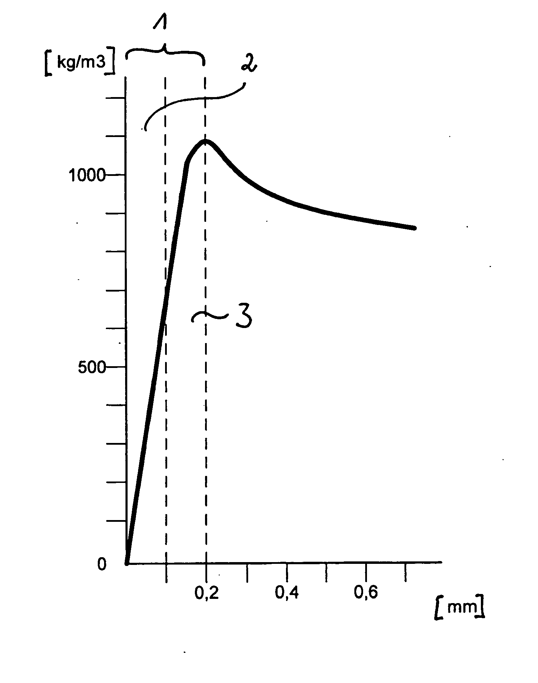

Die Zeichnung zeigt den Auszug eines Rohdichteprofils einer HDF-Platte zur Verwendung für einen Fußbodenbelag. Der mit 1 bezeichnete Bereich ist der Bereich, der bei herkömmlichen Platten abgeschliffen wurde. Hierbei handelt es sich um die sogenannte Verrottungsschicht (Presshaut), die vollständig abgeschliffen wurde. Der mit 2 bezeichnete Bereich stellt den Bereich dar, der erfindungsgemäß von der Presshaut abgeschliffen wird, um die Oberseite der Trägerplatte plan zu schleifen (einebnen), weil aufgrund der Pressentoleranz die Oberseite nicht völlig eben ist. Der mit 3 bezeichnete Bereich stellt den Bereich dar, der durch das Auftragen der Grundierung und Eindringen des Harzes in diese Schicht vergütet wird. In dem Diagramm ist die Rohdichte in kg/m³ und die Plattendicke in mm angegeben. Es ist deutlich erkennbar, dass die Rohdichte innerhalb der Presshaut schnell in einen Bereich von über 1.000 kg/m³ ansteigt und dann im Kern zur Kernmitte hin wieder abfällt.

## Patentansprüche

1. Verfahren zum Herstellen von Paneelen mit folgenden Schritten:
a) Bereitstellen einer großformatigen, pressblanken Trägerplatte aus Holzwerkstoff, die zumindest auf ihrer Oberseite eine bei ihrer Herstellung entstandene Presshaut aufweist,
b) Abschleifen eines Teils der Presshaut von der Oberseite der Trägerplatte,
c) Auftragen einer Grundierung aus einem flüssigen Harz auf Melaminbasis auf die Oberseite der Trägerplatte, wobei das Harz wenigstens teilweise in die obere Randschicht der Trägerplatte hinein diffundiert und den verbliebenen Bereich der Presshaut zumindest teilweise durchdringt und vergütet,
d) Trocknen der Grundierung,
e) Auftragen eines Primers auf die Grundierung,
f) Trocknen des Primers,
g) Auftragen wenigstens eines mit Farbpigmenten angereicherten, wasserbasierten Lackes zur Erzeugung eines Dekors,
h) Trocknen des Dekors,
i) Aufbringen einer Versiegelung aus wenigstens einem mit abriebfesten Partikeln und Zellulosefasern angereicherten Harz auf Melaminbasis,
j) Trocken der Versiegelung,
k) Auftragen einer Grundierung aus einem flüssigen Harz auf Melaminbasis auf die Unterseite der Trägerplatte, wobei das Harz wenigstens teilweise in die untere Randschicht der Trägerplatte hinein diffundiert,
l) Trocknen der Grundierung,
m) Aufbringen eines Gegenzuges auf die Unterseite der Trägerplatte,
n) Verpressen des Schichtaufbaues unter Wirkung und von Druck und Temperatur,
o) Aufteilen der Trägerplatte in Paneele gewünschter Breite und Länge,
p) Anbringen von Verbindungsmitteln und Verriegelungselementen an sich gegenüberliegenden Seitenkanten zum leimlosen Verbinden und Verriegeln mehrerer Paneele zu einem schwimmend verlegten Fußbodenverbund.

2. Verfahren nach Anspruch 1, **dadurch gekennzeichnet, dass** als Trägerplatte eine MDF-, HDF- oder Spanplatte verwendet wird.

3. Verfahren nach einem der Ansprüche 1 oder 2, **dadurch gekennzeichnet, dass** die Presshaut eine Dicke von etwa 0,2 mm aufweist.

4. Verfahren nach einem der Ansprüche 1 bis 3, **dadurch gekennzeichnet, dass** die Presshaut um etwa 0,1 mm abgeschliffen wird.

5. Verfahren nach einem der vorstehenden Ansprüche, **dadurch gekennzeichnet, dass** die Grundierung die Presshaut bis auf eine Tiefe von 0,1 mm durchdringt.

6. Verfahren nach einem oder mehreren der vorstehenden Ansprüche, **dadurch gekennzeichnet, dass** als abriebfeste Partikel Korundpartikel verwendet werden.

7. Verfahren nach einem der vorstehenden Ansprüche, **dadurch gekennzeichnet, dass** eine Mehrzahl von Paneelen zu einem Gebinde verpackt wird.

8. Paneel mit einem verpressten Kern aus Holzwerkstoff, insbesondere aus MDF, HDF oder Span mit folgenden Merkmalen:
a) einer Oberseite, einer Unterseite und zwei Paar gegenüberliegenden Seitenkanten,
b) die Oberseite und die Unterseite des Kerns weisen eine beim Verpressen entstandene Presshaut auf,
c) die Presshaut an der Oberseite ist dünner als die Presshaut an der Unterseite,
d) auf der Oberseite des Kerns sind eine Grundierschicht, eine Primerschicht, wenigstens eine Lack-Dekorschicht und eine abriebfeste Schicht aufgebracht,
e) auf der Unterseite des Kerns sind eine Grundierschicht und eine Gegenzugschicht aufgebracht,
f) die Grundierschicht ist zumindest teilweise in die Presshaut an der Oberseite eingedrungen.

9. Paneel nach Anspruch 8, **dadurch gekennzeichnet, dass** die Grundierschicht aus einem Melaminharz besteht.

10. Paneel nach Anspruch 8, **dadurch gekennzeichnet, dass** die Presshaut an der Oberseite etwa 0,1 mm dünner ist als an der Unterseite.

11. Paneel nach einem der Ansprüche 8 bis 10, **dadurch gekennzeichnet, dass** die Presshaut an der Oberseite teilweise zumindest abgeschliffen ist.

12. Paneel nach Anspruch 11, **dadurch gekennzeichnet, dass** die Presshaut eine Dicke von etwa 0,1 mm besitzt.

13. Paneel nach Anspruch 8, **dadurch gekennzeichnet, dass** die abriebfeste Schicht Zellulosefasern und abriebfeste Partikel, vorzugsweise Korundpartikel, aufweist.

## Claims

1. Method for producing panels with the following steps:
a) making available a large-format, press blank support board of derived timber product which at least on its top has a press skin which has been formed in its production,
b) grinding some of the press skin off the top of the support board,
c) applying a base coat of a liquid resin based on melamine to the top of the support board, the resin diffusing at least in part into the upper edge layer of the support board and penetrating and coating the remaining area of the press skin at least in part,
d) drying the base coat,
e) applying a primer to the base coat,
f) drying the primer,
g) applying at least one water-based lacquer with dye pigments added for producing a decoration,
h) drying the decoration,
i) applying a seal of at least one melamine-based resin with wear resistant particles and cellulose fibers added,
j) drying the seal,
k) applying a base coat of a melamine-based liquid resin to the bottom of the support board, the resin diffusing at least in part into the lower edge layer of the support board,
l) drying the base coat,
m) applying a contacting layer to the bottom of the support board,
n) molding the laminar structure under the action of pressure and temperature,
o) dividing the support board into panels of the desired width and length,
p) attaching connecting means and interlocking elements to opposing side edges for glueless joining and interlocking of several panels into a composite floor which has been laid floating.

2. Method as claimed in Claim 1, wherein the support board is an MDF, HDF or particle board.

3. Method as claimed in one of Claims 1 or 2, wherein the press skin has a thickness of roughly 0.2 mm.

4. Method as claimed in one of Claims 1 to 3, wherein the press skin is ground off by roughly 0. I mm,

5. Method as claimed in one of the preceding claims, wherein the base coat penetrates the press skin to a depth of 0. mm.

6. Method as claimed in one of the preceding claims, wherein the wear resistant particles are corundum particles.

7. Method as claimed in one of the preceding claims, wherein a plurality of panels are packaged into a bundle.

8. Panel with a compressed core of derived timber product, especially of MDF, HDF or particles with the following features:
a) a top, a bottom and two pairs of opposite side edges,
b) the top and the bottom of the core have a press skin which has formed during molding,
c) the press skin on the top is thinner than the press skin on the bottom,
d) on the top of the core a base layer, a primer layer, at least one decorative laquer layer and one wearproof layer are applied,
e) a base layer and a contacting layer layer are applied to the bottom of the core,
f) the base layer has penetrated at least partially into the press skin on the top.

9. Panel as claimed in Claim 8, wherein the base layer consists of a melamine resin.

10. Panel as claimed in Claim 8, wherein the press skin on the top is roughly 0.1 mm thinner than on the bottom.

11. Panel as claimed in one of Claims 8 to 10, wherein the press skin on the top is at least partially ground off.

12. Panel as claimed in Claim 11, wherein the press skin has a thickness of roughly 0.1 mm.

13. Panel as claimed in Claim 8, wherein the wearproof layer has cellulose fibers and wear resistant particles, preferably corundum particles.

## Revendications

1. Procédé pour la fabrication de panneaux, comprenant les étapes suivantes :
a) préparer une plaque de support brute de presse, de grande taille, en matériau dérivé du bois, laquelle présente au moins sur sa face supérieure une peau de pressage issue de sa fabrication,
b) enlever de la face supérieure de la plaque de support, par meulage, une partie de la peau de pressage
c) appliquer sur la face supérieure de la plaque de support, une couche primaire faite d'une résine fluide à base de mélamine, la résine diffusant au moins en partie à l'intérieur de la couche superficielle supérieure de la plaque de support, et imprégnant au moins partiellement et traitant la région restante de la peau de pressage,
d) sécher la couche primaire,
e) appliquer une couche de fond sur la couche primaire,
f) sécher la couche de fond,
g) appliquer au moins un vernis à base d'eau enrichi avec des pigments colorés, pour former un décor,
h) sécher le décor,
i) appliquer une vitrification faite au moins d'une résine à base de mélamine enrichie de particules résistantes à l'abrasion et de fibres de cellulose,
j) sécher la vitrification,
k) appliquer une couche primaire faite d'une résine fluide à base de mélamine, sur la face inférieure de la plaque de support, la résine diffusant au moins en partie à l'intérieur de la couche superficielle inférieure de la plaque de support,
l) sécher la couche primaire,
m) appliquer une contre-traction sur la face inférieure de la plaque de support,
n) presser la structure en couches sous l'effet de la pression et la température,
o) découper la plaque de support en panneaux de la largeur et la longueur souhaitées,
p) poser des moyens de liaison et des éléments de verrouillage sur des bords latéraux opposés pour la liaison et le verrouillage sans colle de plusieurs panneaux en un assemblage de plancher posé flottant.

2. Procédé selon la revendication 1, **caractérisé en ce qu'**on utilise en tant que plaque de support une plaque de MDF, de HDF ou d'aggloméré.

3. Procédé selon la revendication 1 ou 2, **caractérisé en ce que** la peau de pressage présente une épaisseur d'environ 0,2 mm.

4. Procédé selon l'une quelconque des revendications 1 à 3, **caractérisé en ce que** l'on meule environ 0,1 mm de la peau de pressage.

5. Procédé selon l'une quelconque des revendications précédentes, **caractérisé en ce que** la couche primaire imprègne la peau de pressage jusqu'à une profondeur de 0,1 mm.

6. Procédé selon l'une ou plusieurs des revendications précédentes, **caractérisé en ce que** l'on utilise en tant que particules résistantes à l'abrasion des particules de corindon.

7. Procédé selon l'une quelconque des revendications précédentes, **caractérisé en ce que** l'on emballe plusieurs panneaux en un colis.

8. Panneau comprenant une âme pressée en matériau dérivé du bois, en particulier en MDF, HDF ou aggloméré, comprenant les caractéristiques suivantes :
a) une face supérieure, une face inférieure, et deux couples de bords latéraux opposés,
b) la face supérieure et la face inférieure de l'âme présentent une peau de pressage apparaissant lors du pressage,
c) la peau de pressage sur la face supérieure est plus fine que la peau de pressage sur la face inférieure,
d) une couche primaire, une couche de fond, au moins une couche de décor en vernis et une couche résistante à l'abrasion sont appliquées sur la face supérieure de l'âme,
e) une couche primaire et une couche de contre-traction sont appliquées sur la face inférieure de l'âme,
f) la couche primaire est au moins partiellement imprégnée dans la peau de pressage sur la face supérieure.

9. Panneau selon la revendication 8, **caractérisé en ce que** la couche primaire consiste en une résine de mélamine.

10. Panneau selon la revendication 8, **caractérisé en ce que** la peau de pressage sur la face supérieure est plus fine d'environ 0,1 mm que sur la face inférieure.

11. Panneau selon l'une quelconque des revendications 8 à 10, **caractérisé en ce que** la peau de pressage sur la face supérieure est au moins partiellement meulée.

12. Panneau selon la revendication 11, **caractérisé en ce que** la peau de pressage possède une épaisseur d'environ 0,1 mm.

13. Panneau selon la revendication 8, **caractérisé en ce que** la couche résistante à l'abrasion présente des fibres de cellulose et des particules résistantes à l'abrasion, de préférence des particules de corindon.
